Europäisches Patentamt

European Patent Office

Office européen des brevets

(11) Publication number: **0 455 239 A2**

# EUROPEAN PATENT APPLICATION

(21) Application number: **91107104.1**

(22) Date of filing: **30.04.91**

(51) Int. Cl.⁵: **A47J 31/54**

(30) Priority: **03.05.90 IT 2020290**

(43) Date of publication of application:
**06.11.91 Bulletin 91/45**

(84) Designated Contracting States:
**AT BE CH DE DK ES FR GB GR IT LI LU NL SE**

(71) Applicant: **Siccardi, Alberto**
**Via B. Panizza, 8**
**I-20144 Milan(IT)**

Applicant: **Siccardi, Enrico**
**Via B. Panizza, 8**
**Milano(IT)**

Applicant: **Ghidinelli, Giacomo**
**Via P. Bolognini, 57**
**Lumezzane P. (BS)(IT)**

Applicant: **Ghidinelli, Sergio**
**Via P. Bolognini, 57**
**Lumezzane P. (BS)(IT)**

(72) Inventor: **Siccardi, Alberto**
**Via Panizza, 8**
**Milano(IT)**

(74) Representative: **Dr. Ing. A. Racheli & C.**
**Viale San Michele del Carso, 4**
**I-20144 Milano(IT)**

(54) **Apparatus for the preparation of coffee in a microwave oven.**

(57) The apparatus is of the category known as "moka", and has at least its boiler consisting of material transparent to microwaves. A compact form of the apparatus (10) is preferably obtained by positioning the boiler (12) and the container (16) for the ground coffee side by side. Preferably again, the boiler is ring-shaped and positioned around the ground coffee container.

FIG. 2

The present invention refers to the field of apparatuses for the preparation of coffee as a beverage (henceforth called in brief coffee). More exactly it refers to the said apparatuses for use in the home, of the type known as "moka", that is the type in which the water is contained in a small seal-closed boiler and heated and produces steam, and the pressure generated by the steam drives the water into a draw pipe and across a filter-container filled with ground coffee, up to a container of the beverage.

Known apparatuses of this type are made in metal and usually have a boiler element, a filter-container element with a draw pipe, and a beverage container element arranged along one and the same vertical axis and connected with each other.

It is obvious that such known apparatuses cannot be used in microwave ovens, because they are not transparent to microwaves; furthermore their excessive vertical size is often an obstacle. On the other hand, microwave ovens are widely used, and there is a demand in the field to be able to prepare coffee, with the advantages of greater speed offered by heating with microwaves.

The aim of the present invention is therefore to allow the preparation of coffee in a microwave oven.

This aim has been achieved with an apparatus as defined in claim 1. The further claims define other distinctive characteristics of the apparatus.

In other words, the apparatus is realized, partially at least, in material which is transparent to microwaves, for example plastic material, particularly a polycarbonate.

Preferably the apparatus has a boiler part and a container-filter part for the ground coffee, connected with a draw pipe extending into the boiler. In preferred embodiments, such parts are arranged horizontally, side by side, the boiler being preferably ring-shaped and positioned around the ground coffee container.

The new apparatus has the advantage that it can be used in a microwave oven. Its form is compact and allows it to be inserted into the microwave oven space, whose height is usually restricted.

A further advantage is that excellent coffee is obtained, as shown by experiments carried out.

A more detailed description of the apparatus is given below, merely as an example and not restrictive, with reference to the appended drawings, in which:

Figure 1    is a vertical sectional view across an embodiment of the presently preferred apparatus, for the preparation of coffee according to the present invention;

Figure 2    is a vertical sectional view across a modified embodiment of the apparatus;

Figure 3    is a vertical sectional view across a further type of apparatus;

Figure 4    is a vertical sectional view across yet another type of apparatus;

Figure 5    is a vertical sectional view across a further apparatus.

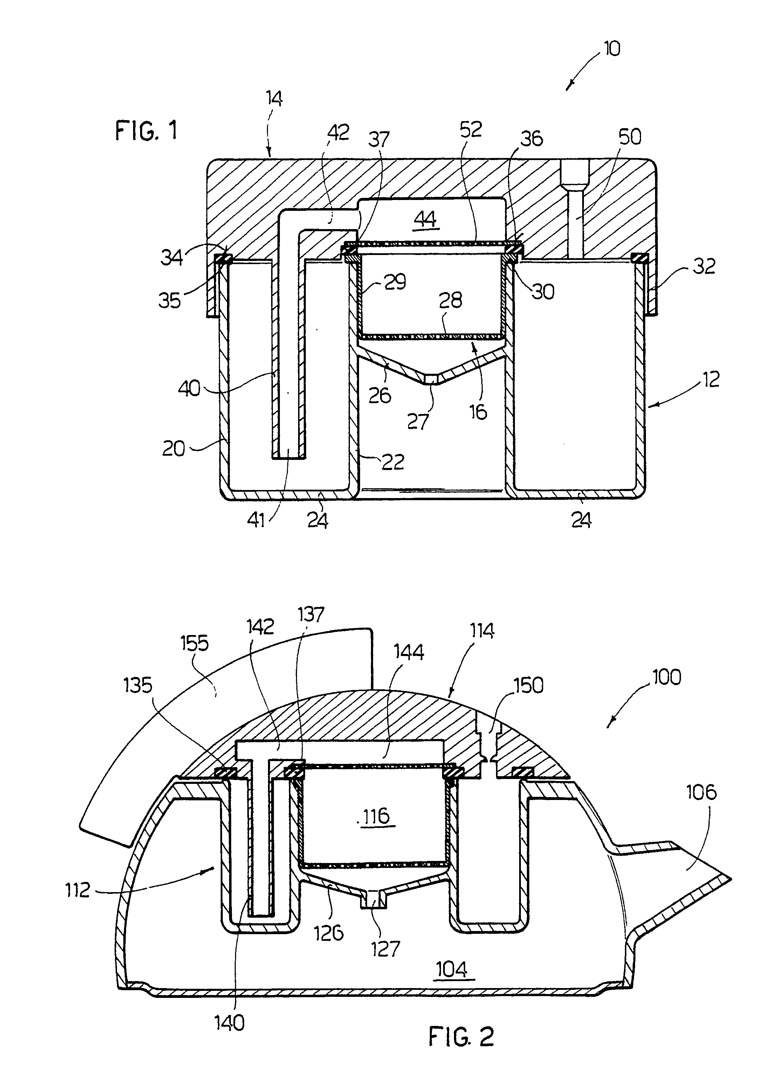

A first example of an apparatus for the preparation of coffee is illustrated in figure 1 and is shown as a whole with reference number 10. It comprises a boiler 12, a lid 14, and a container-filter 16 for the ground coffee.

The boiler 12 consists of a receptacle ring-shaped in plan view, formed by two coaxial cylindrical or conical walls 20 and 22 and by a ring-shaped base 24. The receptacle is open at the top. The ring shape of the boiler may, however, be incomplete and may comprise, for example, only an arc of a circle; or it may be a ring with a polygonal plan instead of a circular one.

A collection chamber 26 in the form of a funnel is preferably, but not necessarily, formed between the walls 22, with its apex facing downwards and a central opening 27.

A container 16 for the ground coffee is in the form of a tray with a perforated base 28 and solid walls 29, and it has a flange 30 on its upper edge for resting on the upper edge of the walls 22 of the boiler.

The lid 14 is enbloc and forms an outer cylindrical flange 32 for applying to the boiler, a first seating 34 for a circular gasket and a second circular seat or seating 36 for a gasket.

A draw pipe 40 is integral with the lid or in one piece with it, and when the lid is assembled, the draw pipe extends downwards inside the boiler until it is near the base. The inner passage 41 of the draw pipe communicates with an inner channel 42 in the lid, which has an elbow shape and communicates with a central chamber 44, which is open at the bottom and defined at the bottom by said second seat 36 for the gasket.

Obviously, lids may be realized with more than one draw pipe.

A through hole 50 is also realized in the lid for receiving a safety valve (not shown).

The seating 34 receives a ring gasket 35; the seat 36 receives a gasket 37. This gasket receives and holds the peripheral edge of a possible perforated plate 52, which may be absent, or may be fixed to the lid with an axial screw (not shown).

When the boiler is filled with water up to a predetermined level, the lid is applied to the boiler, by screwing down the flange 32 on the wall of the boiler, for example.

The gasket 35 forms a seal on the edge of the outer wall 20 of the boiler; the pipe 40 extends into the boiler; the gasket 37 forms a seal between the boiler, the chamber 44 and the ground coffee container.

The water is heated in the boiler and is driven by the steam generated to rise along the passage 41 of the draw pipe 40, along the channel 42, and then passes into the chamber 44 and is forced through the ground coffee in the container 16.

The coffee thus obtained then runs along the wall 26 and through the hole 27. It is then collected in the container underneath (not shown), which, according to the size and proportions of the apparatus, will be positioned centrally below the wall 26 or below the whole apparatus 10.

A modified embodiment of the apparatus, shown with 100, is illustrated in figure 2. In this embodiment, the elements corresponding to those described in relation to figure 1 have the same reference numbers increased by 100 and are not described in detail.

In this case, the element 102 forms both a ring boiler part 112 (in which the draw pipe 140 of the lid 114 is received) and a part acting as a container for the beverage, shown with 104, positioned below and around the boiler 112 and having a spout 106 for pouring. The boiler encloses the container 116 for the ground coffee and the container 104 for the beverage contains the boiler. The lid 114 is applied seal-closed to the element 102, for example by bayonet joints, and has a passage 142, a chamber 144, a housing 150 for a safety valve and a handle 155, as well as a draw pipe 140. This embodiment allows a particularly easy moulding.

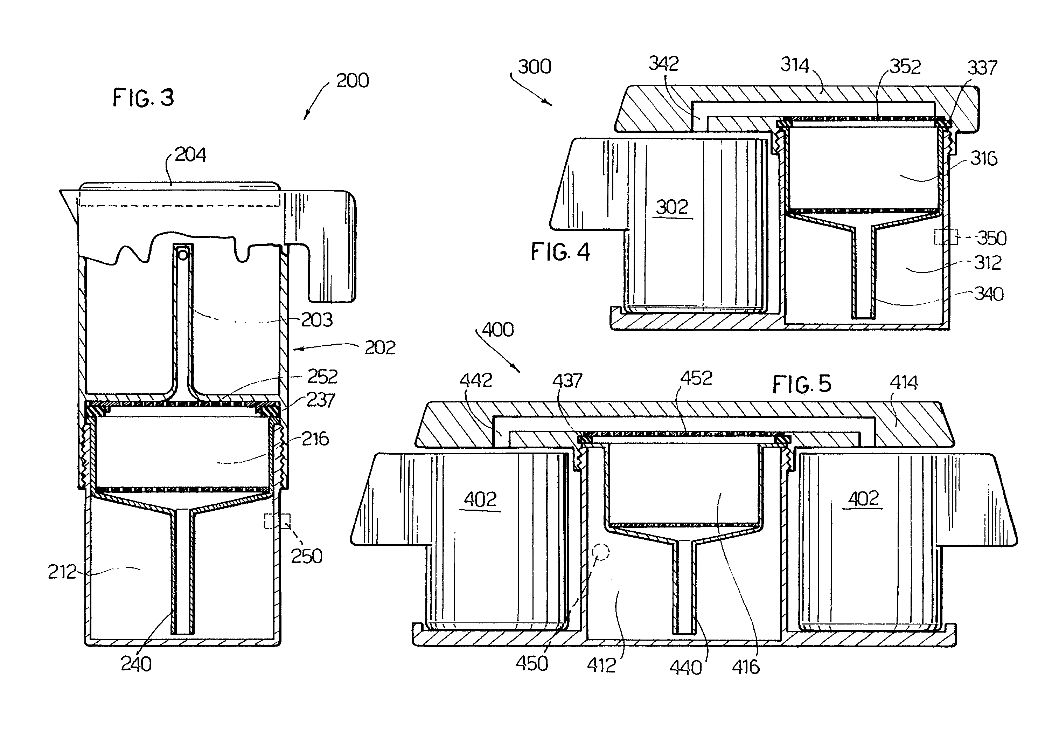

Figures 3, 4 and 5 illustrate further apparatuses for the preparation of coffee, realized at least partially in material which is transparent to microwaves. These apparatuses are shown with reference numbers 200 and 300 respectively. The apparatus 200 comprises a boiler 212 positioned at the bottom, which receives on its upper edge a container 216 for the ground coffee, made integral with the draw pipe 240. The beverage container is shown with 202 and is screwed down on top of the boiler, from which it is separated by a perforated partition plate 252 held by a gasket 237. The container 202 is provided inside with a pipe 203. A lid is shown with reference number 204. The reference number 250 shows the safety valve.

In the apparatus 300 in figure 4, the boiler 312 receives a container 316 for the ground coffee with a draw pipe 340; a lid 314 is fastened, by screwing down for example onto the boiler, and comprises a delivery channel 342 separated from the container 316 by means of a perforated partition plate 352 held by the gasket 337. The delivery channel 342 delivers the coffee produced, by dropping into a beverage container 302, positioned next to the boiler-ground coffee container unit.

The apparatus 400 in figure 5 comprises a boiler 412, a lid 414 sealingly applied onto the latter with gaskets 437, which hold the perforated partition plate 452. The ground coffee container is referenced 416 and is positioned axially and centrally in the boiler. The safety valve is shown with 450. The coffee produced passes beyond the perforated partition plate 452 and inside the radial passages 442 in the lid, to fill two or more cup containers 402 positioned around the boiler.

In the described apparatuses, the possibility is foreseen of making one or more parts in material which is not transparent to microwaves and/or which absorbs microwaves, for example the beverage containers, in which the effects of microwaves are not required.

The attention is drawn to the fact that, in this text, "ground coffee container" means both a container for loose ground coffee and a container for predosed coffee bags.

**Claims**

1. An apparatus for the preparation of coffee by means of the process called "moka", the said apparatus comprising a boiler (12; 112; 212; 312; 412) seal-closed, for containing and heating water, a container (16; 116; 216; 316; 416) for the ground coffee, a draw pipe (40; 140; ...) extending into the boiler and having a passage for the water, extending between the boiler and the coffee container, characterized in that it is realized at least partially in material which is transparent to microwaves.

2. An apparatus according to claim 1, characterized in that it is in polycarbonate.

3. An apparatus according to claim 1, characterized in that the said boiler (12; 112) and the said container (16; 116) for the ground coffee are side by side.

4. An apparatus according to claim 1, characterized in that the said boiler (12; 112) surrounds at least partially the container (16; 116) for the ground coffee.

5. An apparatus according to claim 1, characterized in that it comprises a lid (14; 114) to which said draw pipe (40; 140) is integral, the said lid having an inner passage (42; 142) between the draw pipe and a chamber (44; 144) above the ground coffee container (16; 116).

6. An apparatus according to claim 4, characterized in that the boiler (12; 112) is ring-shaped and the container for the ground coffee (16; 116) is received onto an edge of an inner wall (22) of the boiler.

7. An apparatus according to claim 5, characterized in that the said lid is applied onto the boiler in a sealed manner by means of gaskets (35, 37) received into seatings on the lid.

8. An apparatus according to claim 4, characterized in that it furthermore comprises a part which forms a container (104) for the beverage produced.

9. An apparatus according to claim 8, characterized in that the container part (104) is integral with the boiler part.

10. An apparatus according to claim 9, characterized in that the beverage container part encloses the boiler part, and the latter encloses the container for the ground coffee.

FIG. 1

FIG. 2

FIG. 4

FIG. 5

FIG. 3

6